(19) Europäisches Patentamt
European Patent Office
Office européen des brevets

(11) Numéro de publication : **0 064 888**
**B1**

(12) **FASCICULE DE BREVET EUROPÉEN**

(45) Date de publication du fascicule du brevet : **05.06.85**

(51) Int. Cl.[4] : **B 60 R 21/08**, B 60 R 22/00, B 60 K 28/00, E 05 B 65/20

(21) Numéro de dépôt : **82400576.3**

(22) Date de dépôt : **30.03.82**

# (54) Procédé et système de détection de collision et de commande de dispositifs de sécurité.

(30) Priorité : **28.04.81 FR 8108424**

(43) Date de publication de la demande : **17.11.82 Bulletin 82/46**

(45) Mention de la délivrance du brevet : **05.06.85 Bulletin 85/23**

(84) Etats contractants désignés : **BE DE GB IT SE**

(56) Documents cités :
**EP-A- 0 027 747**
**DE-A- 2 808 872**
**DE-A- 3 001 780**
**US-A- 3 921 129**
**US-A- 4 087 782**

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Hannoyer, Gilles**
**Les Clos du Bel Air Rue Taillevent**
**F-78100 Saint-Germain-en-Laye (FR)**

(74) Mandataire : **Colas, Jean-Pierre et al**
**Régie Nationale des Usines RENAULT 8 et 10 Avenue Emile Zola**
**F-92109 Boulogne-Billancourt (FR)**

EP 0 064 888 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention concerne un procédé et un système automatique de détection de collisions et de commande des dispositifs assurant la sécurité des passagers à bord d'un véhicule.

De tels systèmes sont connus qui utilisent un ou plusieurs capteurs délivrant un signal variant continuellement avec l'accélération, des dispositifs de sécurité tels que des dispositifs de décondamnation électromagnétique de portes de véhicule, de commande pyrotechnique de déclenchement de gonflage de sacs de protection, de commande de ceintures de sécurité à rétraction mécanique et/ou pyrotechnique, de largage de ceintures de sécurité, ou autres, ainsi qu'un circuit électronique qui calcule, à partir des données accélérométriques fournies par les capteurs, certains paramètres dont les valeurs déterminent le déclenchement du ou des dispositifs de sécurité.

Ces systèmes de l'art antérieur réalisent un compromis plus ou moins satisfaisant entre un déclenchement rapide des dispositifs de sécurité en cas de collision réelle du véhicule et une minimalisation du risque de déclenchement intempestif en présence de chocs parasites divers tels que des coups de marteau ou les chocs suscités en roulement par le mauvais état de la chaussée (nids de poule, pavés, etc.).

L'invention vise à réaliser un procédé et un système qui assurent une meilleure immunité aux accélérations ou chocs parasites précités tout en provoquant un déclenchement plus rapide en cas de collision réelle.

A cet effet, l'invention a pour objet un procédé de détection de collisions et de commande de dispositifs de sécurité pour les passagers d'un véhicule, dans lequel on mesure de façon continue les décélérations auxquelles est soumis le véhicule, on convertit le signal de mesure obtenu en un signal numérique ($\gamma$) représentatif de la décélération du véhicule, on traite ledit signal numérique ($\gamma$) et on compare ledit signal traité à des valeurs prédéterminées, et on commande le déclenchement desdits dispositifs de sécurité en fonction du résultat de ladite comparaison, caractérisé en ce qu'on effectue par cycles de durées constantes les opérations suivant lesquelles on calcule une valeur d'accélération pondérée ($\gamma_p$) à partir dudit signal numérique de décélération ($\gamma$) et de l'une de trois constantes ($\Delta_1$, $\Delta_2$, $\Delta_3$) au moins, on effectue une moyenne exponentielle ($S_n$) de l'accélération pondérée ($\gamma_p$), on compare ladite moyenne exponentielle ($S_n$) à au moins une première ($S_1$) et une seconde ($S_2$) valeurs prédéterminées et on choisit l'une desdites constantes ($\Delta_1$, $\Delta_2$, $\Delta_3$) pour le calcul de l'accélération pondérée ($\gamma_p$) lors du cycle suivant en fonction du résultat de ladite comparaison et, chaque fois que ladite moyenne exponentielle ($S_n$) franchit successivement la première valeur prédéterminée ($S_1$) puis la deuxième valeur prédéterminée ($S_2$), on calcule un terme correcteur dont la valeur est fonction du temps compris entre les franchissements successifs des deux valeurs prédéterminées ($S_1$, $S_2$), tandis qu'on conserve pour le terme correcteur ladite valeur calculée tant que la moyenne exponentielle ($S_n$) reste supérieure ou égale à la première valeur prédéterminée ($S_1$) et qu'on donne une valeur nulle au terme correcteur si la moyenne exponentielle décroît en dessous de la première valeur prédéterminée ($S_1$), on calcule ensuite un algorithme (Algo) égal à la somme de la moyenne exponentielle ($S_n$) et du terme correcteur, on compare ledit algorithme à au moins une valeur de seuil ($D_1$) et on déclenche certains au moins desdits dispositifs de sécurité si ledit algorithme est supérieur à ladite valeur de seuil ($D_1$).

Suivant une caractéristique de l'invention, on calcule ladite accélération pondérée ($\gamma_p$) en comparant la valeur du signal numérique de décélération ($\gamma$) à la somme de la décélération pondérée ($\gamma_p$) et de la constante ($\Delta_1$, $\Delta_2$, $\Delta_3$) calculées au cours du cycle précédent et en donnant à ladite accélération pondérée la valeur de ladite somme si la valeur du signal numérique de décélération ($\gamma$) est supérieure à ladite somme et en lui donnant la valeur du signal numérique de décélération ($\gamma$) si cette dernière est inférieure ou égale à ladite somme.

Suivant une autre caractéristique de l'invention, ladite moyenne exponentielle est calculée conformément à la formule :

$$S_{(n+1)} = S_{(n)} + \gamma_p - \frac{S_{(n)}}{\alpha}$$

dans laquelle $S_{(n+1)}$ représente la valeur actuelle de la moyenne exponentielle, $S_{(n)}$ représente la valeur de la moyenne exponentielle calculée au cours du cycle précédent, ($\gamma_p$) représente la valeur de l'accélération pondérée qui vient d'être calculée au début du cycle en cours et $\alpha$ est une constante.

Suivant encore une autre caractéristique de l'invention, la valeur du terme correcteur est calculée au moyen d'un décompteur qui est initialisé à un nombre prédéterminé ($C_o$) lorsque ladite moyenne exponentielle ($S_{n+1}$) franchit la première valeur prédéterminée ($S_1$) et qui est décrémenté à chaque cycle, le décomptage du décompteur étant interrompu lorsque ladite moyenne exponentielle ($S_{n+1}$) franchit la deuxième valeur prédéterminée ($S_2$) après avoir franchi la première ($S_1$) ou lorsque le contenu du décompteur atteint une valeur nulle, le terme correcteur étant fonction du contenu du décompteur au moment de ladite interruption multiplié par un coefficient ($2^1$).

D'autres caractéristiques et avantages de l'invention ressortiront de la description qui va suivre de deux variantes de sa réalisation données uniquement à titre d'exemple et illustrées par les dessins annexés sur lesquels :

la figure 1 est un schéma synoptique illustrant la structure générale du système suivant l'invention ;

la figure 2 est un schéma électrique illustrant essentiellement une forme de réalisation du circuit de mise en forme du système de la figure 1 ;

la figure 3 illustre une horloge utilisée dans le système de la figure 1 ;

la figure 4 est un chronogramme montrant les signaux de sortie $H_1$ à $H_8$ de l'horloge de la figure 3 ;

les figures 5 à 8 constituent ensemble un calculateur câblé utilisé avec l'horloge de la figure 3 dans une première forme de réalisation du système de la figure 1 ;

les figures 9 à 12 constituent ensemble un algorithme illustrant le fonctionnement du procédé suivant l'invention dans le cas où il est mis en œuvre avec un calculateur microprogrammé, suivant une seconde forme de réalisation du système de la figure 1.

En se reportant à la figure 1, le système de détection de collisions et de commande comprend un ou plusieurs capteurs d'accélération 1, par exemple de type piézoélectrique, fournissant un signal électrique variant continuellement avec l'accélération. Ce signal est appliqué par un conducteur 50 à un circuit de mise en forme 2 dont la sortie est reliée à un convertisseur analogique-numérique 3 par un conducteur 51. La sortie du convertisseur 3 est connectée par un bus de données 52 à un calculateur 5.

Le calculateur 5 est également relié au convertisseur 3 par des conducteurs 53 et 54 destinés à transmettre respectivement des ordres de départ de la conversion analogique-numérique et de lecture du convertisseur. Le calculateur 5 comporte une sortie 55 de prise de diagnostic, une sortie 56 pour un voyant de défaut (non représenté) et une connexion 57 de contrôle du capteur 1 reliée au circuit de mise en forme 2.

Le calculateur 5 comprend enfin des sorties de commande 58, 59, 60 reliées à des actuateurs correspondants $A_1$, $A_2$, $A_3$ par l'intermédiaire d'un amplificateur de puissance 6, et des entrées de diagnostic 61, 62, 63 associées respectivement aux actuateurs $A_1$, $A_2$, $A_3$. Bien que trois actuateurs aient été représentés sur la figure 1, il est bien évident que leur nombre peut être supérieur ou inférieur.

En se reportant maintenant à la Fig. 2, le capteur 1 est connecté à l'entrée positive d'un amplificateur 100 par l'intermédiaire du conducteur 50 et d'une résistance 101. Cette entrée positive est également reliée à la masse par l'intermédiaire d'une résistance 102, avec laquelle est connecté en parallèle un condensateur 103, et d'un transistor 107 monté en émetteur commun. La base du transistor 107 est connectée au conducteur 57 de contrôle de capteur et son collecteur est polarisé par un diviseur de tension constitué de deux résistances 104 et 105 connectées en série entre un régulateur de tension 106, fournissant une tension de référence V ref, et la masse. Cette tension de référence V ref est appliquée au convertisseur analogique/numérique 3, de même que la sortie 51 de l'amplificateur 100, connectée à sa propre entrée négative, est connectée à l'entrée du convertisseur 3.

Comme le montre la Fig. 5, le bus de données 52 est relié à l'entrée d'un registre 300 qui reçoit également le signal $H_1$ de l'horloge 200. La sortie du registre 300 est connectée, d'une part à une entrée d'un comparateur numérique 314, et d'autre part à une multiportes 3 états 302 (en anglais « tri-state »). La multiportes 302 est connectée à une multiportes 3 états 301 par un inverseur 303 et les portes 301 et 302 sont connectées ensemble à l'entrée d'un registre type maître-esclave 304 recevant le signal d'horloge $H_3$.

La sortie 353 du registre 304 est appliquée à une entrée d'un additionneur 311 dont l'autre entrée reçoit l'une des trois constantes numériques $\Delta_1$, $\Delta_2$ et $\Delta_3$ engendrées en 305, 306 et 307 et sélectionnées par des multiportes 3 états 308, 309 et 310 respectivement.

La sortie de l'additionneur 311 est connectée à l'entrée d'un registre maître-esclave 313 qui reçoit le signal d'horloge $H_2$. La sortie du registre 313 est appliquée, d'une part à l'autre entrée du comparateur numérique 314, et d'autre part à la multiportes 301. Enfin, la sortie 358 du comparateur numérique 314 et la sortie « carry » 357 de l'additionneur 311 sont connectées à l'entrée d'une porte ou 312 dont la sortie est connectée entre la porte 302 et l'inverseur 303.

En se référant maintenant à la Fig. 6, la sortie 353 du registre maître-esclave 304 est également reliée à une entrée d'un additionneur 401 dont l'autre entrée est connectée à la sortie d'un registre 400 recevant le signal d'horloge $H_5$. La sortie 450 du registre 400 attaque également un diviseur 402 qui divise la valeur $S_n$ contenue dans le registre 400 par un nombre $\alpha$ égal à $2^k$, k étant de préférence un nombre entier. La sortie de l'additionneur 401 et celle du diviseur 402, inversée par un inverseur 403, sont connectées aux entrées 451, 453 d'un additionneur 404 pourvu également d'une entrée « carry » 454. La sortie de l'additionneur 404 est reliée à l'entrée d'un registre maître-esclave 405 recevant le signal d'horloge $H_4$ et dont la sortie 456 attaque l'entrée du registre 400.

Comme cela apparaît sur la Fig. 7, la sortie 456 du registre 405 attaque l'une des deux entrées de chacun de deux comparateurs numériques 501 et 502 dont les autres entrées sont attaquées respectivement par des signaux $S_1$ et $S_2$ représentant des constantes numériques prédéterminées. La sortie 551 du comparateur 501 attaque une entrée d'une porte ET 507 par l'intermédiaire d'un inverseur 503, une entrée d'une deuxième porte ET 506 et une entrée d'une troisième porte ET 505. La porte ET 507 reçoit à sa deuxième entrée le signal d'horloge $H_7$ et sa sortie 556 attaque l'entrée chargement d'un décompteur 509 qui reçoit également le signal d'horloge $H_6$. La porte ET 506 présente deux autres entrées dont l'une est connectée à la sortie 552 du comparateur 502 par l'intermédiaire d'un inverseur 504 et dont l'autre est attaquée par la sortie 558 du décompteur 509 délivrant un signal binaire « 0 » ou « 1 » suivant que le compte dans le décompteur 509 est égal ou différent de zéro. La sortie 557 de la porte ET

506 attaque l'entrée d'autorisation de décomptage du décompteur 509 dont la sortie 560 attaque un multiplicateur par $2^1$, 1 étant de préférence un nombre entier.

Par ailleurs, la deuxième entrée de la porte ET 505 est connectée à la sortie de l'inverseur 504 et sa sortie 553 attaque la multiportes 3 états 309 de sélection de la constante $\Delta_2$. La multiportes 3 états 308 de sélection de la constante $\Delta_1$ est, elle, attaquée directement par la sortie 554 de l'inverseur 503. Enfin, la multiportes 3 états 310 de sélection de la constante $\Delta_3$ est attaquée directement par la sortie 552 du comparateur numérique 502.

Cette sortie 552 est également reliée à l'entrée de mise à 1 d'une bascule RS 508 dont l'entrée de mise à zéro est commandée par la sortie de l'inverseur 503.

En se reportant également à la Fig. 8, la sortie 562 de la bascule RS 508 attaque une entrée d'une multiportes 3 états 600 et, par l'intermédiaire d'un inverseur, une entrée d'une autre multiportes 3 états 601 dont l'autre entrée est à la masse. L'autre entrée de la multiportes 600 est attaquée par la sortie du multiplicateur 510 par $2^1$ et les sorties des portes 600 et 601 sont connectées ensemble à une entrée d'un additionneur 602. L'autre entrée de cet additionneur 602 est attaquée par la sortie 456 du registre 405.

L'additionneur 602 produit à sa sortie 651 un signal représentant la valeur de l'algorithme calculé dans le circuit décrit précédemment et cet algorithme est comparé à des valeurs $D_1$, $D_2$ et $D_3$ dans trois comparateurs numériques 603, 604 et 605. Ces comparateurs attaquent respectivement des bascules D 606, 607 et 608 recevant également le signal d'horloge $H_8$ et commandant respectivement des monostables 609, 610 et 611 dont les sorties respectives constituent les sorties de commande 58, 59 et 60 du calculateur 5.

En fonctionnement, le signal d'accélération issu du capteur 1 est amplifié et filtré par le circuit 2. Le convertisseur analogique numérique 3 fourni au calculateur 5 une valeur numérique de l'accélération.

Le calculateur a pour rôle de traiter ce signal et de déclencher si nécessaire une ou plusieurs des commandes d'actuateurs 58, 59, 60. De plus le calculateur 5 diagnostique une défaillance éventuelle desdits actuateurs par les entrées 61, 62, 63. En cas de défaillance, le voyant défaut est actionné par la sortie 56 et le ou les types de défaut sont signalés sur la sortie diagnostic 55 où un message sous forme de bits émis en série signale le ou les défauts détectés.

Le calculateur 5 cadence l'échantillonnage du signal d'accélération par l'intermédiaire de la connexion 53.

La figure 2 concerne la mise en forme du signal d'accélération. Le capteur piezo-électrique est polarisé par l'intermédiaire des résistances 101, 102, 104, 105 et du régulateur 106. Ceci permet au convertisseur 3 de fournir des valeurs d'accélérations positives ou négatives : les accélérations sont considérées positives lors d'une décélération du véhicule. Le condensateur 103 sert à éliminer les fréquences hautes et sa capacité est très inférieure à celle du capteur 1. Les résistances 101 et 102 sont suffisamment élevées afin de conserver les fréquences basses utiles pour la détection d'une collision. L'amplificateur 100 est monté en suiveur afin de présenter une impédance d'entrée très élevée. En sortie de l'amplificateur 100 le signal est apte à être traité par le convertisseur analogique numérique 3.

En fonctionnement normal, le transistor 107 est bloqué. Afin d'assurer le contrôle du capteur, au démarrage par exemple, le transistor 107 est rendu saturé par le calculateur par l'intermédiaire de la connexion 57. Le capteur est alors polarisé à OV. Le transistor 107 est ensuite bloqué. Le capteur, se comportant principalement comme une capacité, subit une charge exponentielle vers le niveau défini par la tension V ref et les résistances 104 et 105.

Le calculateur vérifie par l'intermédiaire du convertisseur 3 que le signal mesuré se rapproche à une tolérance près d'un échelon suivi d'une exponentielle définis par la capacité du capteur, les résistances 101, 102, 104, 105 et la tension V ref dès que le transistor 107 est bloqué. En d'autres termes, le calculateur 5 rend conducteur le transistor 107 pour polariser le capteur 1 à une tension nulle pendant une période de temps prédéterminée, puis rend le transistor 107 non conducteur pour charger le capteur à une polarisation prédéterminée et compare la loi de charge du capteur à une loi de charge prédéterminée.

Les figures 3 et 4 explicitent le fonctionnement de l'horloge 200 qui pilote tout le fonctionnement du système. L'horloge 200 fournit huit signaux de sortie (figure 4) qui définissent huit événements séquentiels utiles pour le fonctionnement du calculateur.

Les huit sorties $H_1$ à $H_8$ sont numérotées dans l'ordre chronologique. Une période du système est définie par la succession de ces huit événements au cours desquels est lue une valeur d'accélération. Cette valeur entre dans le calcul d'un nouveau terme de l'algorithme. A l'issu de ce calcul est prise la décision d'actionner un ou plusieurs des actuateurs destinés à assurer la protection des passagers.

Le circuit de la figure 5 effectue le calcul d'une accélération pondérée $\gamma_p$ à partir de l'accélération $\gamma$ fournie par le convertisseur 3. L'accélération pondérée est telle que l'accroissement positif entre deux termes d'accélérations pondérées successifs est limité à une valeur $\Delta$ positive. Par contre l'accélération pondérée n'est pas limitée en décroissance. Au départ, à régime stable, on a $\gamma_p = \gamma$. En cas d'évolution de $\gamma$, durant un choc par exemple, on a :

$$\gamma_{p(n+1)} = \gamma_{(n+1)} \text{ si } \gamma_{(n+1)} \leq \gamma_{p(n)} + \Delta \;;$$

dans le cas contraire, on pose :

$$\gamma_{p(n+1)} = \gamma_{p(n)} + \Delta$$

(n) et (n + 1) représentant l'ordre de la scrutation et (n + 1) étant la scrutation qui suit celle d'ordre (n).

C'est ce calcul qui est réalisé par les éléments de la figure 5. Lors du coup d'horloge $H_1$, la valeur de $\gamma$ fournie par le convertisseur 3 est capturée dans le registre 300.

L'accélération pondérée de la période précédente est présente dans le registre 304 qui est de type maître-esclave. L'additionneur 311 réalise la somme $\gamma_{p(n)} + \Delta$ qui est capturée dans le registre 313 lors du coup d'horloge $H_2$. On remarquera que la valeur $\Delta$ est choisie parmi les 3 valeurs $\Delta_1$, $\Delta_2$, $\Delta_3$ des blocs 305, 306, 307, la commutation s'effectuant par les portes 308, 309, 310 dont une seule est rendue passante par l'intermédiaire des sorties 554, 553, 552.

Dans le cas où l'additionneur 311 venait sa capacité dépassée par la valeur du résultat $\gamma_{p(n)} + \Delta$, sa sortie « retenue » (carry) 357 est mise à « 1 ».

La valeur $\gamma_{p(n)} + \Delta$ contenue dans le registre 313 est comparée dans le comparateur 314 à la valeur $\gamma_{(n+1)}$, issue du registre 300. Si $\gamma_{(n+1)} \leq \gamma_{p(n)} + \Delta$ la sortie 358 est mise à « 1 ».

La porte « OU » 312 rend passante la multiportes 3 états 302 si le résultat $\gamma_{(n+1)} \leq \gamma_{p(n)} + \Delta$ ou s'il y a présence d'une retenue en 357. La multiportes 3 états 302 présente la valeur $\gamma_{(n+1)}$ au registre 304 qui capture cette valeur lors du coup d'horloge $H_3$. La multiportes 3 états 301 est alors rendue non passante par l'intermédiaire de l'inverseur 303.

Dans le cas contraire où aucune des sorties 357 ou 358 n'est à « 1 », c'est-à-dire si la progression de $\gamma_{(n+1)}$ est telle que :

$$\gamma_{(n+1)} > \gamma_{p(n)} + \Delta,$$

la multiportes 301 est passante et présente le résultat $\gamma_{p(n)} + \Delta$ au registre 304 qui lors du coup d'horloge $H_3$ remplace la valeur $\gamma_{p(n)}$ par la nouvelle valeur $\gamma_{p(n+1)} = \gamma_{p(n)} + \Delta$.

La valeur de l'accélération pondérée $\gamma_p$ est reprise pour la suite du calcul à la sortie 353 du registre maître-esclave 304.

Le circuit de la figure 6 effectue le calcul d'une série de terme $S_{(n)}$ telle que :

$$S_{(n+1)} = S_{(n)} + \gamma_{p(n+1)} - \frac{S_{(n)}}{\alpha}$$

où $\alpha$ est une constante. La série $S_{(n)}$ est une moyenne exponentielle de l'accélération pondérée $\gamma_{p(n)}$ avec un coefficient multiplicatif $\alpha$. En effet, on a :

$$S_{(n)} = S_{(n+1)} \quad \text{si} \quad S_{(n)} = \alpha . \gamma_{p(n+1)} .$$

Le coefficient multiplicatif a pour but de conserver la totalité de la définition fournie par le convertisseur 3. Une moyenne exponentielle ordinaire aurait consister à diviser les 2 termes $\gamma_{p(n+1)}$ et $S_{(n)}$ par la constante $\alpha$. Pour plus de commodité la constante $\alpha$ est de préférence une puissance de l'entier 2 :

$\alpha = 2^k$, k étant de préférence un nombre entier.

Le diviseur 402 est dans ce cas réalisé par un simple décalage des liaisons 450 contenant les informations binaires du registre 400 représentant le terme $S_{(n)}$.

Le terme $S_{(n)}/\alpha$ est complémenté par le multi-inverseur 403. L'additionneur 401 réalise la somme $S_{(n)} + \gamma_p$. L'additionneur 404 réalise la somme $(S_{(n)} + \gamma_p) + (\overline{S_{(n)}/\alpha}) + 1$ par l'intermédiaire des entrées 451, 453 et de l'entrée retenue (carry) 454.

Le terme $(\overline{S_{(n)}/\alpha}) + 1$ représente en fait $- S_{(n)}/\alpha$.

Lors du coup d'horloge $H_4$, la valeur

$$S_{(n+1)} = S_{(n)} + \gamma_p - \frac{S_{(n)}}{\alpha}$$

est capturée dans le registre 405. Lors du coup d'horloge $H_5$, le registre 400 est mis à jour avec la nouvelle valeur $S_{(n+1)}$ qui servira au calcul lors de la période suivante.

La figure 7 explicite la sélection des constantes de pondération $\Delta_1$, $\Delta_2$, $\Delta_3$ et le mode de calcul d'une correction ou terme correcteur présent sur la multi-connexion 561.

Le terme $S_{(n+1)}$ de la série présent en 456 est comparé à deux valeurs numériques $S_1$ et $S_2$ à l'aide des comparateurs numériques 501 et 502 qui délivrent respectivement un niveau « 1 » sur les connexions 551 et 552 si respectivement $S_{(n+1)}$ est plus grand que $S_1$ et $S_2$.

L'inverseur 503 et la porte ET 505 permettent de sélectionner :

$\Delta_1$ si $S_{(n+1)} < S_1$
$\Delta_2$ si $S_1 \leq S_{(n+1)} < S_2$
$\Delta_3$ si $S_{(n+1)} \geq S_2$

par l'intermédiaire des connexions 554, 553, 552.

Le calcul de la correction s'effectue comme suit :

Lorsque $S_{(n+1)}$ atteint le seuil $S_1$ et que le coup d'horloge $H_7$ est présent, le décompteur 509 est chargé à une valeur initiale Co.

A chaque période où $S_1 \leq S_{(n+1)} < S_2$, la sortie 557 autorise un décomptage du décompteur 509 de une unité lorsque survient l'impulsion d'horloge $H_6$. L'autorisation en 557 est générée par l'intermédiaire de la porte logique « ET » 506 et de l'inverseur 504. Si le décompteur atteint la valeur 0, l'autorisation de décomptage est supprimée par l'intermédiaire de la sortie 558 qui fournit un niveau « 0 » si le décompteur passe à 0. La valeur C présente dans le décompteur est multipliée par un coefficient $B = 2^1$ (1 de préférence entier) par le bloc 510. Le bloc 510 consiste dans ce cas à décaler les informations binaires du décompteur 509 vers la gauche en introduisant des niveaux « 0 » sur les liaisons de plus faibles poids.

La bascule 508 de type RS permet l'autorisation ou l'inhibition de la correction précédemment calculée :

— le terme correcteur est autorisé si $S_{(n+1)}$ franchit le seuil $S_2$ ;
— le terme correcteur est inhibé si $S_{(n+1)}$ descend en dessous du seuil $S_1$.

On voit donc que le terme correcteur est d'autant plus important que le nombre de périodes de scrutation est faible entre le franchissement du seuil $S_1$ et celui du seuil $S_2$. Si le nombre de périodes entre le franchissement du seuil $S_1$ et celui du seuil $S_2$ est supérieur ou égal au nombre Co, la correction est nulle.

Lorsqu'un terme correcteur a été calculé et autorisé, il reste constant tant que $S_{(n+1)} \geq S_1$, mais il prend une valeur nulle si $S_{(n+1)}$ décroît en dessous de $S_1$.

De plus, tant que la série $S_{(n+1)}$ n'atteint pas le seuil $S_2$, la correction n'est pas prise en compte. Ceci garantit une bonne immunité aux petits chocs même s'ils sont durs.

Le circuit de la figure 8 effectue le calcul de l'algorithme final et le déclenchement des actuateurs de seuils différents.

L'additionneur 602 somme le terme $S_{(n+1)}$ et la correction présente sur la sortie 561 du multiplicateur 510 si la sortie « autorisation du terme correcteur » en 562 est à « 1 ». Les multiportes 3 états 600 et 601 sont l'une ou l'autre sélectionnées afin de sommer ou non la correction. L'algorithme résultant en 651 est comparé à, par exemple, trois seuils $D_1$, $D_2$, $D_3$ correspondant à des protections adaptées à l'intensité du choc. La comparaison est effectuée par trois comparateurs numériques 603, 604 et 605 qui délivrent un niveau « 1 » si l'algorithme est respectivement supérieur aux seuils $D_1$, $D_2$, $D_3$.

L'information des comparaisons n'est capturée que lors du coup d'horloge $H_8$ par les bascules de type D 606, 607 et 608. Dans le cas où une bascule 606, 607 ou 608 capture un niveau haut correspondant à une nécessité de déclenchement d'un groupe d'actuateurs, les monostables 609, 610 ou 611 assurent le maintien de l'ordre de déclenchement pendant un temps suffisamment important pour permettre le déclenchement effectif des actuateurs concernés (charge pyrotechnique ou décondamnation des portes par exemple).

La présence du terme correcteur permet un déclenchement très rapide sur choc sévère du fait qu'il vient s'ajouter à la valeur de la série S qui franchit les seuils souhaitables plus rapidement.

Les figures 9, 10, 11 et 12 explicitent le procédé de détection de chocs et de déclenchement suivant l'invention dans le cas où le calculateur utilisé est de type microprogrammé.

A la figure 9, le déroulement des opérations débute dès la mise sous tension. Une séquence de contrôle du ou des capteurs et des actuateurs est tout d'abord exécutée. Une phase d'initialisation suit, telle que :

$\gamma = \gamma_p = \gamma_0$
$R = 0$
$\Delta = \Delta_1$
$S_n = S_{n+1} = \alpha \cdot \gamma_0$

Cette phase comprend également :

— la mesure du niveau stabilisé de la série $S_{(n)}$, définie par la polarisation du capteur au démarrage du moteur ;
— le calcul des seuils $D_1$, $D_2$, $D_3$ par différence avec le niveau stabilisé mesuré ;
— le lancement d'une conversion pour le convertisseur 3.

Ce qui suit est une boucle qui réalise une lecture de l'accélération, le calcul de mise à jour de l'algorithme et la décision de déclenchement de un ou plusieurs groupes d'actuateurs.

Départ de boucle :

— calcul de $\gamma_p + \Delta$
— lecture de la valeur de $\gamma$ sur le convertisseur analogique-numérique 3 ;
— stockage de ces valeurs dans un registre ;

— lancement d'une conversion du convertisseur analogique-numérique ;
— calcul de $\gamma - (\gamma_p + \Delta)$.
Si ce terme est positif faire $\gamma_p = \gamma_p + \Delta$.
Sinon faire $\gamma_p = \gamma$
— calcul de $S_{(n)}/\alpha$ par décalage de bits dans un registre ($\alpha$ étant une puissance de 2) ;
— calcul de $S_{(n)} + \gamma_p - S_{(n)}/\alpha$
— faire $S_{(n)} = S_{(n+1)}$.

La suite de la boucle est illustrée par la figure 10 qui est une suite logique de la figure 9. Elle consiste à :

— tester si $S_n \geqslant S_1$.
Si la condition n'est pas remplie, faire R = 0, R étant un « drapeau » susceptible de prendre l'une de trois valeurs 0, 1 ou 2,
$\Delta = \Delta_1$.
Correction = 0
et sauter à « Algo = $S_n$ + correction » qui constitue la phase de calcul de l'algorithme.
Si la condition est remplie :
faire $\Delta = \Delta_2$
— tester si R = 0.
Si la condition est remplie faire
R = 1
C = Co (Co valeur entière)
et sauter à « calcul algorithme ».
Si la condition n'est pas remplie,
— tester $S_n \geqslant S_2$.

Si la condition est remplie, faire $\Delta = \Delta_3$
— tester si R = 1.
Si la condition R = 1 n'est pas remplie, sauter à « calcul algorithme ».
Si la condition R = 1 est remplie
faire R = 2
calculer correction = $C \times 2^1$ (1 valeur entière).

Si la condition $S_n \geqslant S_2$ n'est pas remplie,
— tester R = 1.
Si la condition n'est pas remplie, sauter à « calcul algorithme ».
Si la condition est remplie,
— tester si C = 0.
Si la condition C = 0 est remplie, sauter à « calcul algorithme ».
Si la condition C = 0 n'est pas remplie, faire C = C − 1.
— « Calcul algorithme »
faire Algo = $S_n$ + correction,
On se reportera ensuite à la figure 11 qui est une suite logique de la figure 10 et où sont illustrées les phases suivantes du procédé :
— tester si Algo $\geqslant D_1$.
Si la condition n'est pas remplie sauter à « test fin de temporisation TO » (fig. 11).
Si la condition Algo $\geqslant D_1$ est remplie :
Activation du premier actuateur $A_1$ ;
Initialisation et lancement du compteur de temps TO
— tester si Algo $\geqslant D_2$.
Si la condition n'est pas remplie sauter à « test fin de temporisation TO ».
Si la condition Algo $\geqslant D_2$ est remplie :
Activation du deuxième actuateur $A_2$ ;
Initialisation et lancement du compteur de temps TO
— tester si Algo $\geqslant D_3$.
Si la condition Algo $\geqslant D_3$ n'est pas remplie sauter à « test fin de temporisation TO ».
Si la condition Algo $\geqslant D_3$ est remplie :
Activation du troisième actuateur $A_3$ ;
Initialisation et lancement du compteur de temps TO.
La figure 12 est une suite logique de la figure 11 et illustre les phases suivantes :
— « test fin de temporisation TO ».
Si la temporisation TO n'est pas terminée sauter à « Attente fin de temporisation T1 ».
Si la temporisation TO est terminée désactivation des trois actuateurs ;
— « Attente fin de temporisation T1 ».

Le système boucle sur cette instruction tant que la temporisation T1 n'est pas terminée.

— Initialisation d'une nouvelle temporisation T1.

— Sauter à « Départ boucle » ceci constitue la dernière instruction de la boucle.

Bien entendu, l'invention n'est pas limitée aux deux formes de réalisation décrites ci-dessus. C'est ainsi, par exemple, qu'il peut être prévu de déclencher plusieurs actuateurs au lieu d'un seul actuateur $A_1$, $A_2$ ou $A_3$ en fonction du seuil franchi $D_1$, $D_2$ ou $D_3$. Plus généralement, on peut prévoir de comparer l'algorithme à un, deux ou plus de trois seuils et, de façon similaire, on peut comparer la moyenne exponentielle $S_n$ à plus de deux seuils et utiliser par conséquent plus de trois constantes $\Delta_1$, $\Delta_2$ et $\Delta_3$ pour le calcul de $\gamma_p$ et plus d'un terme correcteur pour le calcul de l'algorithme.

**Revendications**

1. Procédé de détection de collisions et de commande de dispositifs de sécurité pour les passagers d'un véhicule, dans lequel on mesure de façon continue les décélérations auxquelles est soumis le véhicule, on convertit le signal de mesure obtenu en un signal numérique ($\gamma$) représentatif de la décélération du véhicule, on traite ledit signal numérique ($\gamma$) et on compare ledit signal traité à des valeurs prédéterminées, et on commande le déclenchement desdits dispositifs de sécurité en fonction du résultat de ladite comparaison, caractérisé en ce qu'on effectue par cycles de durées constantes les opérations suivant lesquelles on calcule une valeur d'accélération pondérée ($\gamma_p$) à partir dudit signal numérique de décélération ($\gamma$) et de l'une de trois constantes ($\Delta_1$, $\Delta_2$, $\Delta_3$) au moins, on effectue une moyenne exponentielle ($S_{n+1}$) de l'accélération pondérée ($\gamma_p$), on compare ladite moyenne exponentielle ($S_{n+1}$) à au moins une première ($S_1$) et une seconde ($S_2$) valeurs prédéterminées et on choisit l'une desdites constantes ($\Delta_1$, $\Delta_2$, $\Delta_3$) pour le calcul de l'accélération pondérée ($\gamma_p$) lors du cycle suivant en fonction du résultat de ladite comparaison et, chaque fois que ladite moyenne exponentielle ($S_{n+1}$) franchit successivement la première valeur prédéterminée ($S_1$) puis la deuxième valeur prédéterminée ($S_2$), on calcule un terme correcteur dont la valeur est fonction du temps compris entre les franchissements successifs des deux valeurs prédéterminées ($S_1$, $S_2$), tandis qu'on conserve pour le terme correcteur ladite valeur calculée tant que la moyenne exponentielle ($S_{n+1}$) reste supérieure ou égale à la première valeur prédéterminée ($S_1$) et qu'on donne une valeur nulle au terme correcteur si la moyenne exponentielle décroît en dessous de la première valeur prédéterminée ($S_1$), on calcule ensuite un algorithme (Algo) égal à la somme de la moyenne exponentielle ($S_n$) et du terme correcteur, on compare ledit algorithme à au moins une valeur de seuil ($D_1$) et on déclenche certains au moins desdits dispositifs de sécurité ($A_1$, $A_2$, $A_3$) si ledit algorithme est supérieur ou égal à ladite valeur de seuil ($D_1$).

2. Procédé suivant la revendication 1, caractérisé en ce qu'on calcule ladite accélération pondérée ($\gamma_p$) en comparant la valeur du signal numérique de décélération ($\gamma$) à la somme de la décélération pondérée ($\gamma_p$) et de la constante ($\Delta_1$, $\Delta_2$, $\Delta_3$) déterminées au cours du cycle précédent et en donnant à ladite accélération pondérée la valeur de ladite somme si la valeur du signal numérique de décélération ($\gamma$) est supérieure à ladite somme et en lui donnant la valeur du signal numérique de décélération ($\gamma$) si cette dernière est inférieure ou égale à ladite somme.

3. Procédé suivant l'une quelconque des revendications 1 et 2, caractérisé en ce que ladite moyenne exponentielle est calculée conformément à la formule :

$$S_{(n+1)} = S_{(n)} + \gamma_p - \frac{S_{(n)}}{\alpha}$$

dans laquelle $S_{(n+1)}$ représente la valeur actuelle de la moyenne exponentielle, $S_{(n)}$ représente la valeur de la moyenne exponentielle calculée au cours du cycle précédent, ($\gamma_p$) représente la valeur de l'accélération pondérée qui vient d'être calculée au début du cycle en cours et $\alpha$ est une constante.

4. Procédé suivant l'une quelconque des revendications 1 à 3, caractérisé en ce que la valeur du terme correcteur est calculée au moyen d'un décompteur qui est initialisé à un nombre prédéterminé (Co) lorsque ladite moyenne exponentielle ($S_{n+1}$) franchit la première valeur prédéterminée ($S_1$) et qui est décrémenté à chaque cycle, le décomptage du décompteur étant interrompu lorsque ladite moyenne exponentielle ($S_{n+1}$) franchit la deuxième valeur prédéterminée ($S_2$) après avoir franchi la première ($S_1$) ou lorsque le contenu du décompteur atteint une valeur nulle, le terme correcteur étant fonction du contenu du décompteur au moment de ladite interruption multiplié par un coefficient ($2^1$).

5. Système de détection de collisions et de commande de dispositifs de sécurité adapté pour la mise en œuvre du procédé suivant l'une quelconque des revendications 1 à 4, et comprenant au moins un capteur capacitif de décélération, un circuit de mise en forme du signal de sortie du capteur, un convertisseur analogique-numérique, un calculateur numérique et au moins un actuateur commandé par le calculateur numérique, caractérisé en ce que ledit circuit de mise en forme (2) comporte un dispositif de test du capteur (1) comprenant un commutateur électronique (107) rendu conducteur par le calculateur (5) pour polariser ledit capteur (1) à une tension nulle pendant une période prédéterminée, puis rendu non conducteur par le calculateur (5) pour charger le capteur à une polarisation prédéterminée, le calculateur (5) étant adapté pour comparer la loi de charge du capteur à une loi de charge prédéterminée.

**Claims**

1. A process for detecting collisions and controlling safety devices for the passengers of a vehicle, wherein the decelerations to which the vehicle is subjected are continuously measured, the measurement signal produced is converted into a digital signal ($\gamma$) representing deceleration of the vehicle, said digital signal ($\gamma$) is processed and said processed signal is compared to predetermined values, and triggering of said safety devices is controlled in dependence on the result of said comparison operation, characterised in that the following operations are performed in cycles of constant durations, comprising calculating a weighted acceleration value ($\gamma_p$) from said digital deceleration signal ($\gamma$) and one of three constants ($\Delta_1$, $\Delta_2$, $\Delta_3$) at least, forming an exponential mean ($S_{n+1}$) of the weighted acceleration ($\gamma_p$), comparing said exponential mean ($S_{n+1}$) to at least first and second predetermined values ($S_1$, $S_2$), and selecting one of said constants ($\Delta_1$, $\Delta_2$, $\Delta_3$) for calculating the weighted acceleration ($\gamma_p$) in the following cycle in dependence on the result of said comparison operation and, whenever said exponential mean ($S_{n+1}$) successively passes the first predetermined value ($S_1$) and then the second predetermined value ($S_2$), calculating a correction term, the value of which is dependent on the time between the times at which the exponential mean successively passes the two predetermined values ($S_1$, $S_2$), while preserving said calculated value for the correction term as long as the exponential mean ($S_{n+1}$) remains higher than or equal to the first predetermined value ($S_1$) and giving a zero value to the correction term if the exponential mean falls below the first predetermined value ($S_1$), then calculating an algorithm (Algo) equal to the sum of the exponential mean ($S_n$) and the correction term, comparing said algorithm to at least one threshold value ($D_1$) and triggering some at least of said safety devices ($A_1$, $A_2$, $A_3$) if said algorithm is higher than or equal to said threshold value ($D_1$).

2. A process according to claim 1 characterised by calculating said weighted acceleration ($\gamma_p$) by comparing the value of the digital deceleration signal ($\gamma$) to the sum of the weighted deceleration ($\gamma_p$) and the constant ($\Delta_1$, $\Delta_2$, $\Delta_3$) which are determined in the course of the preceding cycle and by giving to said weighted acceleration the value of said sum if the value of the digital deceleration signal ($\gamma$) is higher than said sum and giving thereto the value of the digital deceleration signal ($\gamma$) if the latter is lower than or equal to said sum.

3. A process according to either one of claims 1 and 2 characterised in that said exponential mean is calculated in accordance with the following formula :

$$S_{(n+1)} = S_{(n)} + \gamma_p - \frac{S_{(n)}}{\alpha}$$

wherein $S_{(n+1)}$ represents the present value of the exponential mean, $S_{(n)}$ represents the value of the exponential mean calculated in the course of the preceding cycle, ($\gamma_p$) represents the value of the weighted acceleration which has just been calculated at the beginning of the cycle being performed, and $\alpha$ is a constant.

4. A process according to any one of claims 1 to 3 characterised in that the value of the correction term is calculated by means of a down counter which is initialized to a predetermined number (Co) when said exponential mean ($S_{n+1}$) passes the first predetermined value ($S_1$) and which is decremented in each cycle, the counting down operation of the down counter being interrupted when said exponential mean ($S_{n+1}$) passes the second predetermined value ($S_2$) after having passed the first value ($S_1$) or when the content of the down counter reaches a zero value, the correction term being dependent on the content of the down counter at the time of said interruption multiplied by a coefficient ($2^1$).

5. A system for detecting collisions and controlling safety devices, for carrying out the process according to any one of claims 1 to 4 and comprising at least one capacitive deceleration detector, a circuit for shaping the output signal of the detector, an analog-to-digital converter, a digital computer and at least one actuator controlled by the digital computer, characterised in that said shaping circuit (2) comprises a device for testing of the detector (1) comprising an electronic switching means (107) which is rendered conducting by the computer (5) to bias said detector (1) to a zero voltage during a predetermined period, and then rendered non-conducting by the computer (5) to charge the detector to a predetermined bias, the computer (5) being arranged to compare the law in respect of charging of the detector to a predetermined charging law.

**Patentansprüche**

1. Verfahren zum Feststellen von Zusammenstößen und zum Steuern von Sicherheitsanlagen für die Insassen eines Fahrzeuges, bei dem kontinuierlich die Verzögerungen gemessen werden, denen das Fahrzeug unterworfen ist, das erhaltene Meßsignal in ein numerisches Signal (Y), umgewandelt wird, das die Fahrzeugverzögerung darstellt, das numerische Signal (Y) verarbeitet wird und das verarbeite Signal mit vorgegebenen Werten verglichen wird, und das Auslösen der Sicherheitsanlagen als Funktion des Ergebnisses dieses Vergleichs gesteuert wird, dadurch gekennzeichnet, daß mittels Zyklen von konstanter Dauer diejenigen Operationen durchgeführt werden, mit denen ein gewichteter Beschleuni-

gungswert ($Y_p$) berechnet wird, ausgehend vom numerischen Verzögerungssignal (Y) und von wenigstens einer von drei Konstanten ($\Delta_1$, $\Delta_2$, $\Delta_3$) daß ein exponentieller Mittelwert ($S_{n+1}$) der gewichteten Beschleunigung ($Y_p$) gebildet wird, daß dieser exponentielle Mittelwert ($S_{n+1}$) mit wenigstens einem ersten vorgegebenen Wert ($S_1$) und einem zweiten vorgegebenen Wert ($S_2$) verglichen wird und daß eine der Konstanten ($\Delta_1$, $\Delta_2$, $\Delta_3$) ausgewählt wird zur Berechnung der gewichteten Beschleunigung ($Y_p$) während des folgenden Zyklus als Funktion des Resultats des genannten Vergleichs, daß, jedesmal wenn der exponentielle Mittelwert ($S_{n+1}$) nacheinander den ersten vorgegebenen Wert ($S_1$) und den zweiten vorgegebenen Wert ($S_2$) überschreitet, ein Korrekturfaktor berechnet wird, dessen Wert eine Funktion der Zeit ist zwischen den aufeinander folgenden Überschreitungen der beiden vorgegebenen Werte ($S_1$, $S_2$), während dieser errechnete Wert für den Korrekturfaktor gespeichert wird, solange der exponentielle Mittelwert ($S_{n+1}$) grösser oder gleich als der erste vorgegebene Wert ($S_1$) ist und daß der Korrekturfaktor den Wert Null erhält, wenn der exponentielle Mittelwert unter den ersten vorgegebenen Wert ($S_1$) fällt, daß anschließend ein Algorithmus (ALGO) berechnet wird, der gleich der Summe aus dem exponentiellen Mittelwert ($S_n$) und dem Korrekturfaktor (S), daß dieser Algorithmus mit wenigstens einem Schwellwert ($D_1$) verglichen wird und daß wenigstens einige der Sicherheitsanlagen ($A_1$, $A_2$, $A_3$) ausgelöst werden, wenn der Algorithmus größer oder gleich dem Schwellwert ($D_1$) ist.

2. Verfahren nach Anspruch 1, dadurch gekennzeichnet, daß die genannte gewichtete Beschleunigung ($Y_p$) dadurch berechnet wird, daß der Wert des numerischen Verzögerungssignals (Y) mit der Summe der gewichteten Verzögerung ($Y_p$) und der während des vorhergehenden Zyklus bestimmten Konstanten ($\Delta_1$, $\Delta_2$, $\Delta_3$) verglichen wird, und daß die gewichtete Beschleunigung den Wert dieser Summe erhält, wenn der Wert des numerischen Verzögerungssignals (Y) größer als diese Summe ist und daß ihm der Wert des numerischen Verzögerungssignals (Y) gegeben wird, wenn letzterer kleiner oder gleich dieser Summe ist.

3. Verfahren nach einem der Ansprüche 1 und 2, dadurch gekennzeichnet, daß der exponentielle Mittelwert gemäß der folgenden Formel berechnet wird :

$$S_{(n+1)} = S_{(n)} + \gamma_p - \frac{S_{(n)}}{\alpha}$$

in der $S_{(n+1)}$ den Momentanwert des exponentiellen Mittelwertes darstellt, $S_{(n)}$ den während des vorhergehenden Zyklus berechneten Wertes des exponentiellen Mittelwertes darstellt, ($Y_p$) den gewichteten Beschleunigungswert darstellt, der zu Beginn des ablaufenden Zyklus berechnet worden ist und $\alpha$ eine Konstante ist.

4. Verfahren nach einem der Ansprüche 1 bis 3, dadurch gekennzeichnet, daß der Wert des Korrekturfaktors mittels eines Abwärtszählers berechnet wird, der bei einer vorgegebenen Zahl (Co) gestartet wird, wenn der exponentielle Mittelwert ($S_{n+1}$) den ersten vorgegebenen Wert ($S_1$) überschreitet und der bei jedem Zykus zurückgestellt wird, wobei das Abwärtszählen des Abwärtszählers unterbrochen wird, wenn der exponentielle Mittelwert ($S_{n+1}$) den zweiten vorgegebenen Wert ($S_2$) überschreitet, nachdem der erste ($S_1$) überschritten worden ist, oder wenn der Inhalt des Abwärtszählers einen Wert Null erreicht, wobei der Korrekturfaktor eine Funktion des Inhaltes des Abwärtszählers im Zeitpunkt dieser Unterbrechung ist, multipliziert mit einem Koeffizienten ($2^1$) ist.

5. Einrichtung zum Feststellen von Zusammenstößen und zum Steuern von Sicherheitsanlagen, geeignet zur Durchführung des Verfahrens nach einem der Ansprüche 1 bis 4, und wenigstens aufweisend einen kapazitiven Verzögerungsfühler, einen Schaltkreis zur Formung des Ausgangssignals des Fühlers, einen analog-numerischen Umwandler, einen numerischen Rechner und wenigstens einen vom numerischen Rechner gesteuerten Schalter, dadurch gekennzeichnet, daß der Formungskreis (2) eine Testanordnung für den Fühler (1) aufweist, mit einem elektronischen Umschalter (107), der durch den Rechner (5) leitend geschaltet wird um den Fühler (1) auf eine Spannung Null während einer vorgegebenen Periode zu laden, anschließend in den nichtleitenden Zustand geschaltet wird durch den Rechner, um den Fühler auf eine vorgegebene Spannung zu laden, wobei der Rechner (5) geeignet ist, um das Ladungsgesetz des Fühlers mit einem vorgegebenen Ladungsgesetz zu vergleichen.

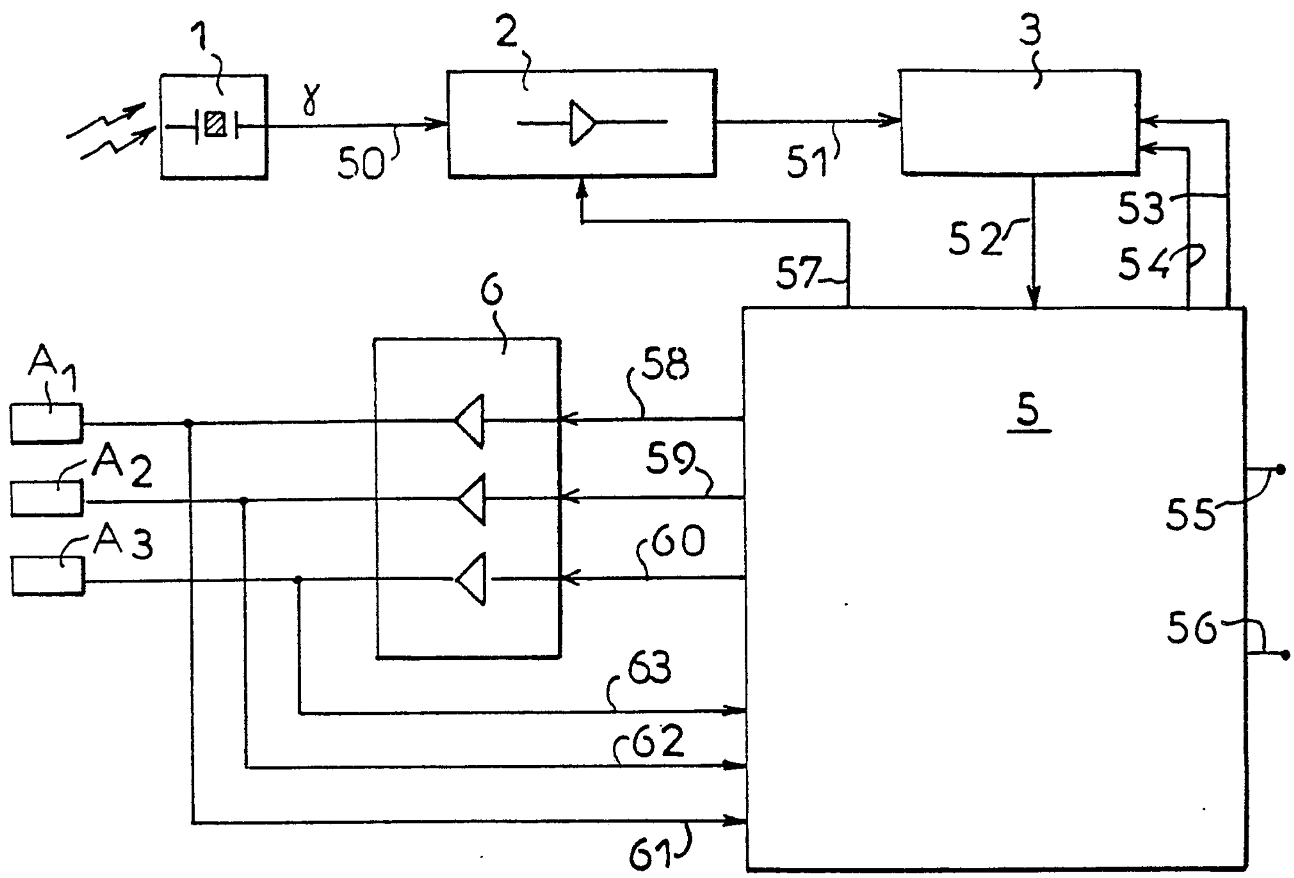
1
γ
50
2
51
3
53
52
54
57
6
58
A1
A2
A3
59
5
55
60
56
63
62
61

FIG.1

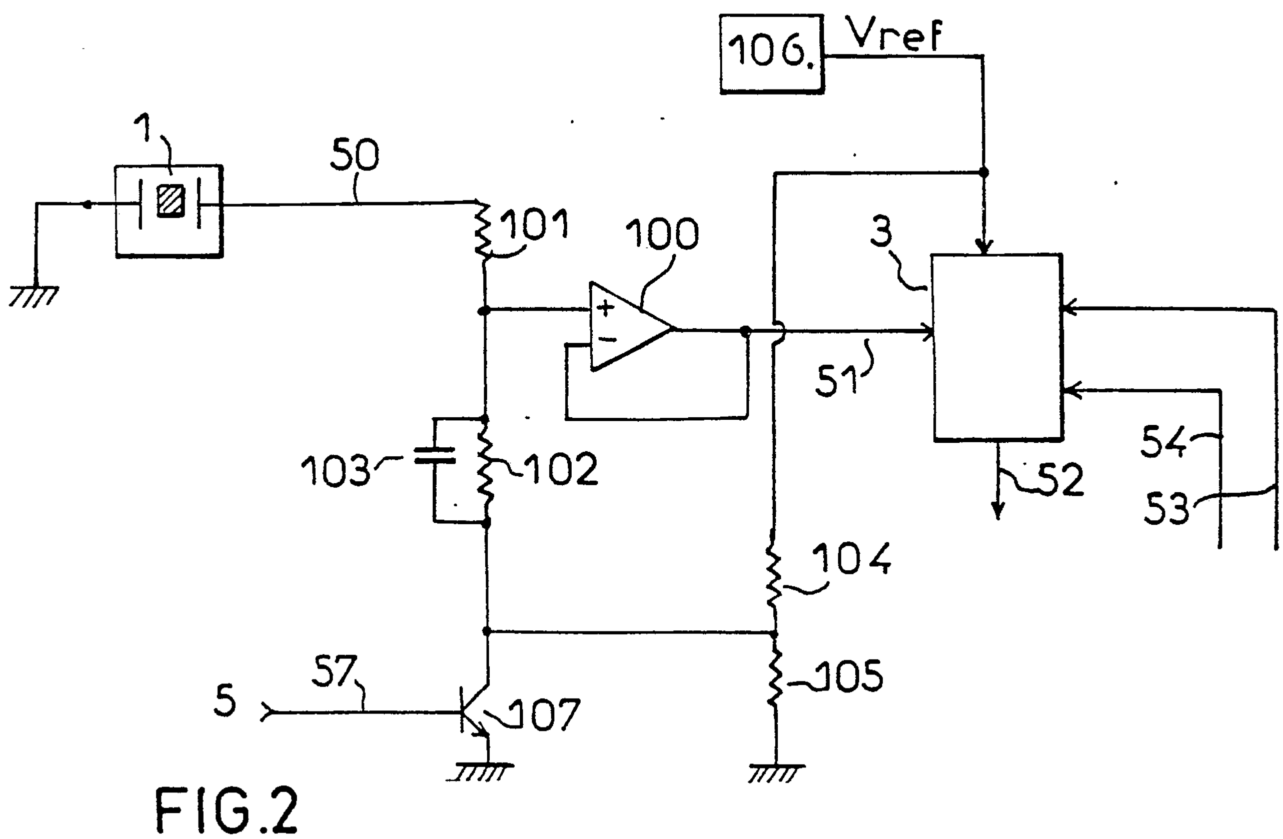
106
Vref
1
50
101
100
3
51
103
102
54
52
53
104
57
5
107
105

FIG.2

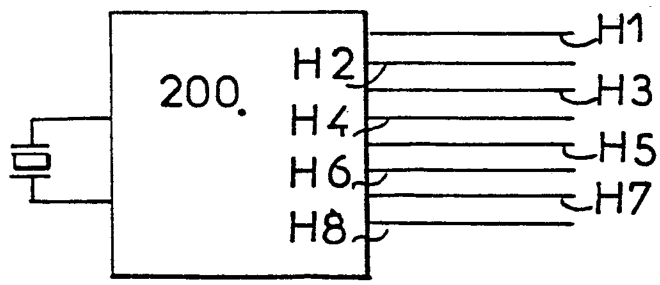


FIG.3

FIG.4

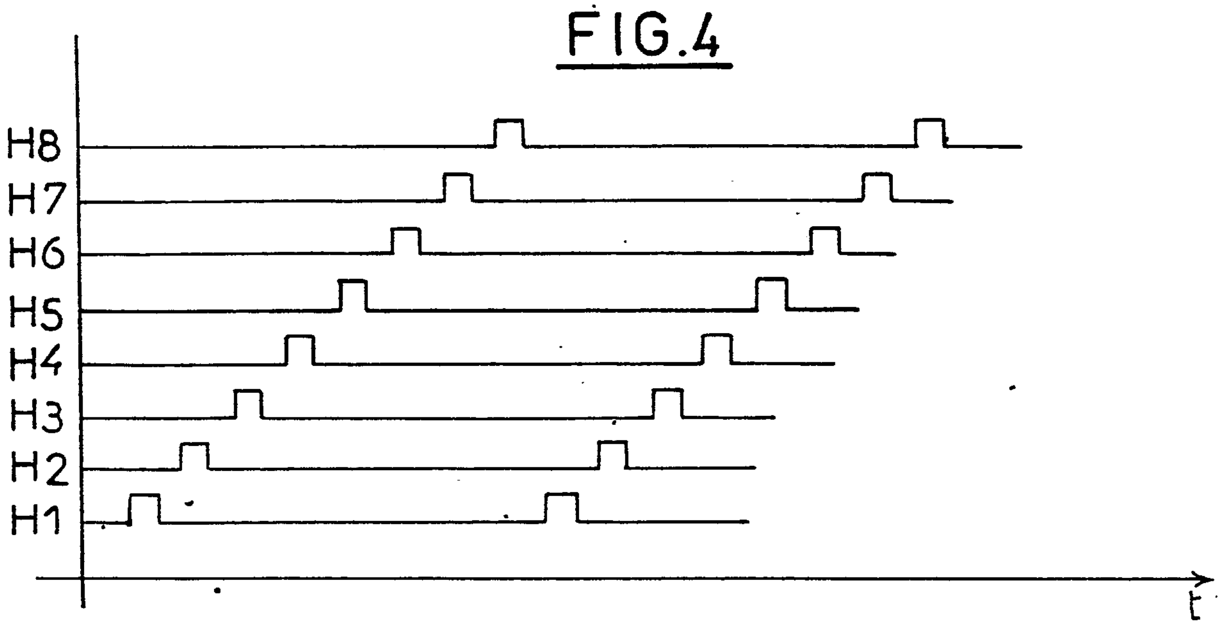


FIG12

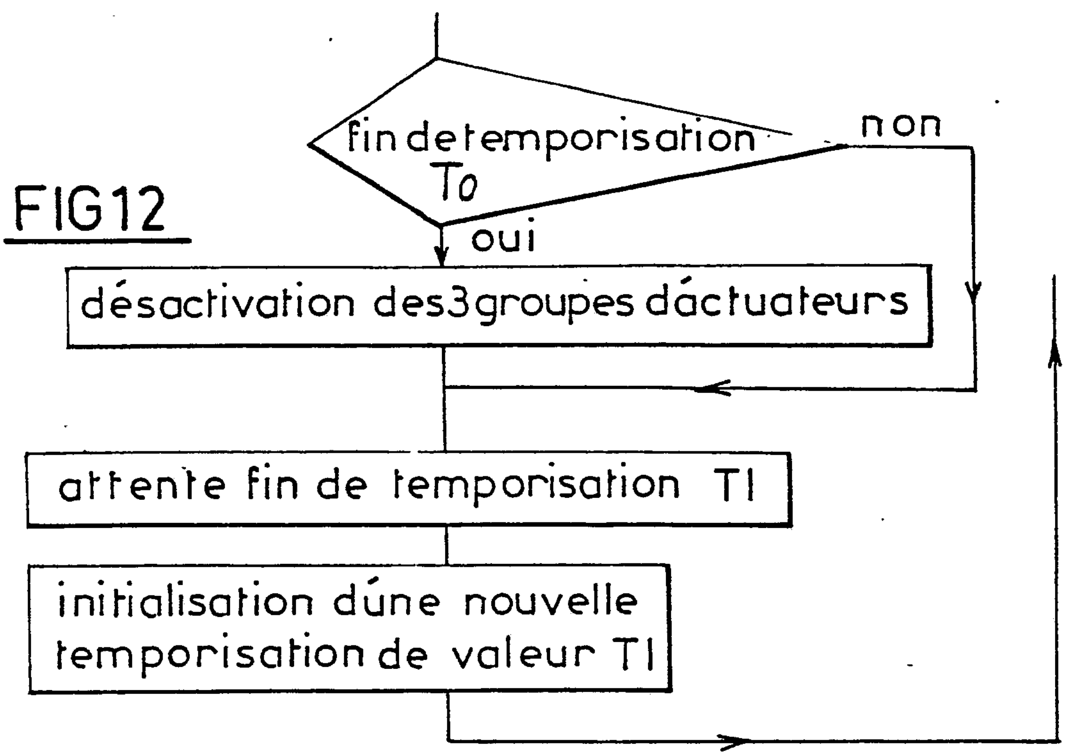

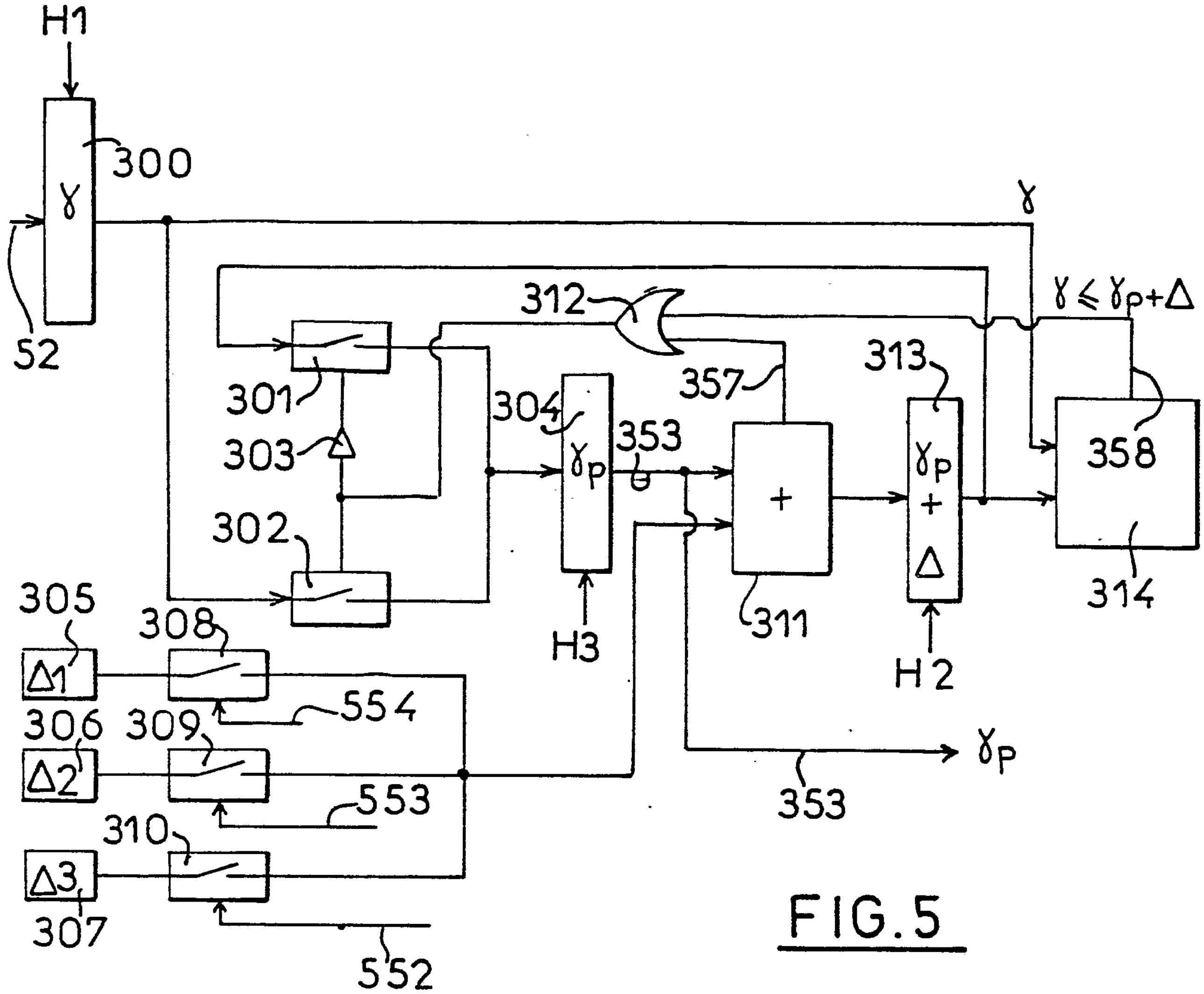
H1
300
γ
52
γ
312
γ ≤ γp+Δ
301
357
313
304
γp
353
γp
+
Δ
358
303
+
302
311
314
305
308
H3
H2
Δ1
554
306
309
Δ2
553
γp
353
310
Δ3
307
552

FIG.5

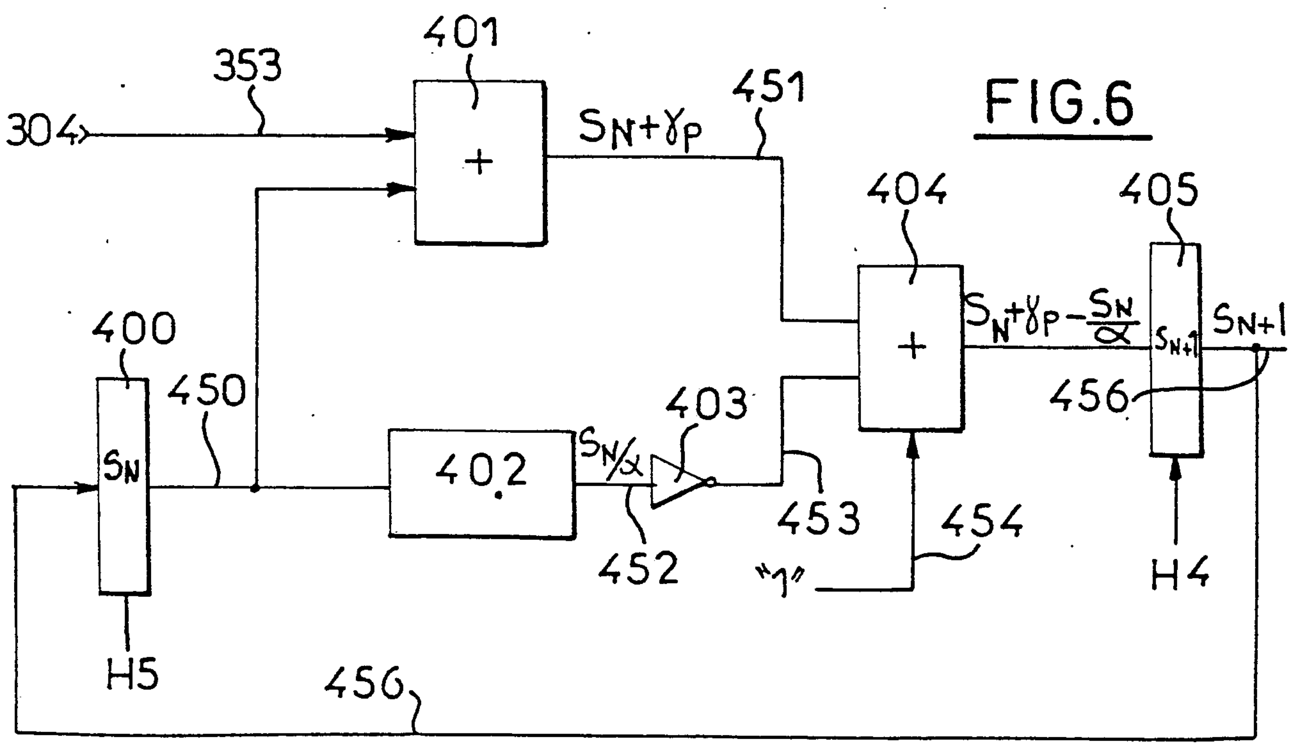
401
353
451
304
SN+γP
+
404
405
400
SN+γP−SN/α
SN+1
SN+1
450
+
456
SN
403
402
SN/α
453
452
454
"1"
H4
H5
456

FIG.6

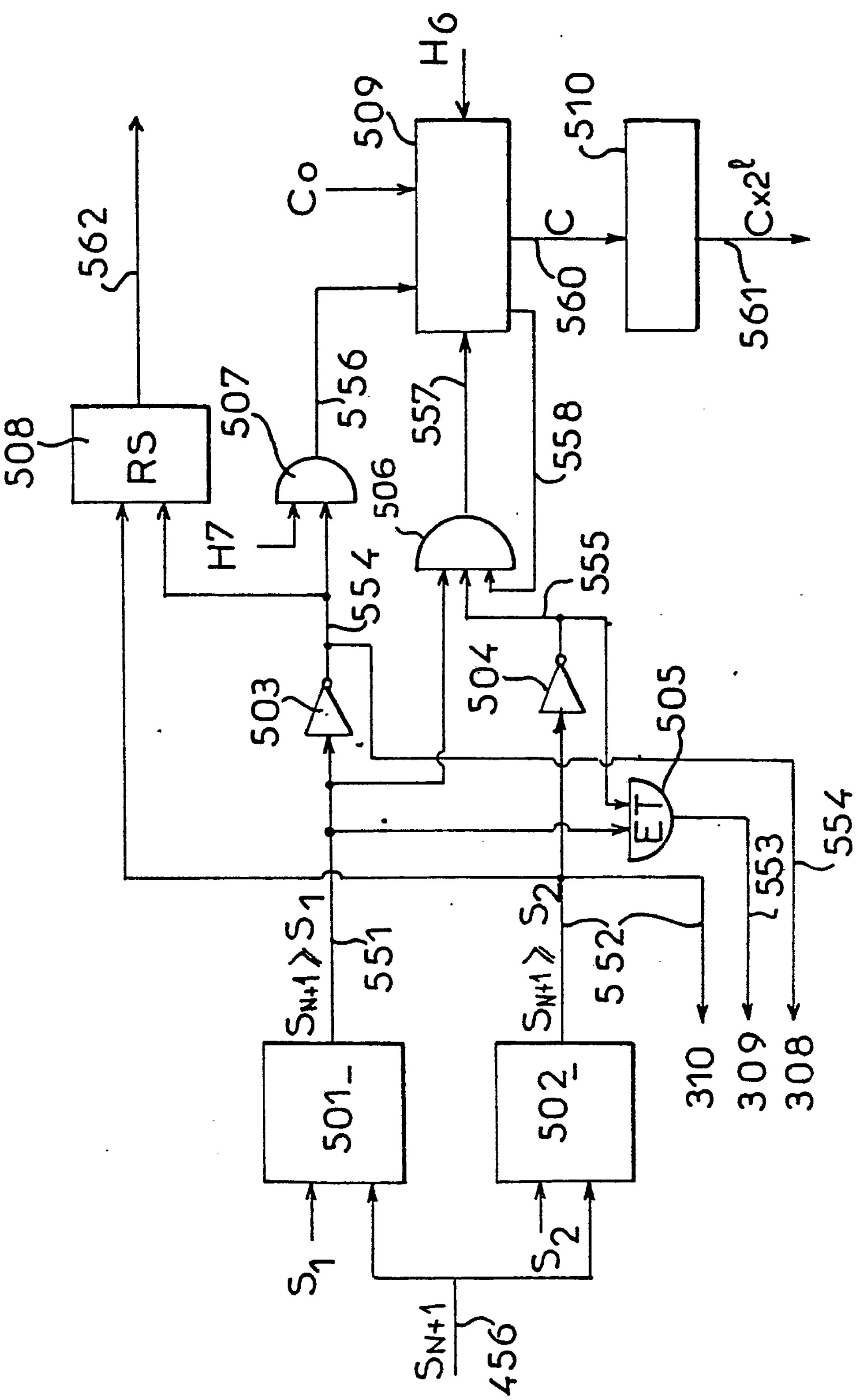
501
502
503
504
505
506
507
508
509
510
RS
ET
H6
H7
Co
C
Cx2ℓ
S1
S2
SN+1
SN+1 ≥ S1
SN+1 ≥ S2
456
551
552
553
554
555
556
557
558
560
561
562
308
309
310

FIG.7

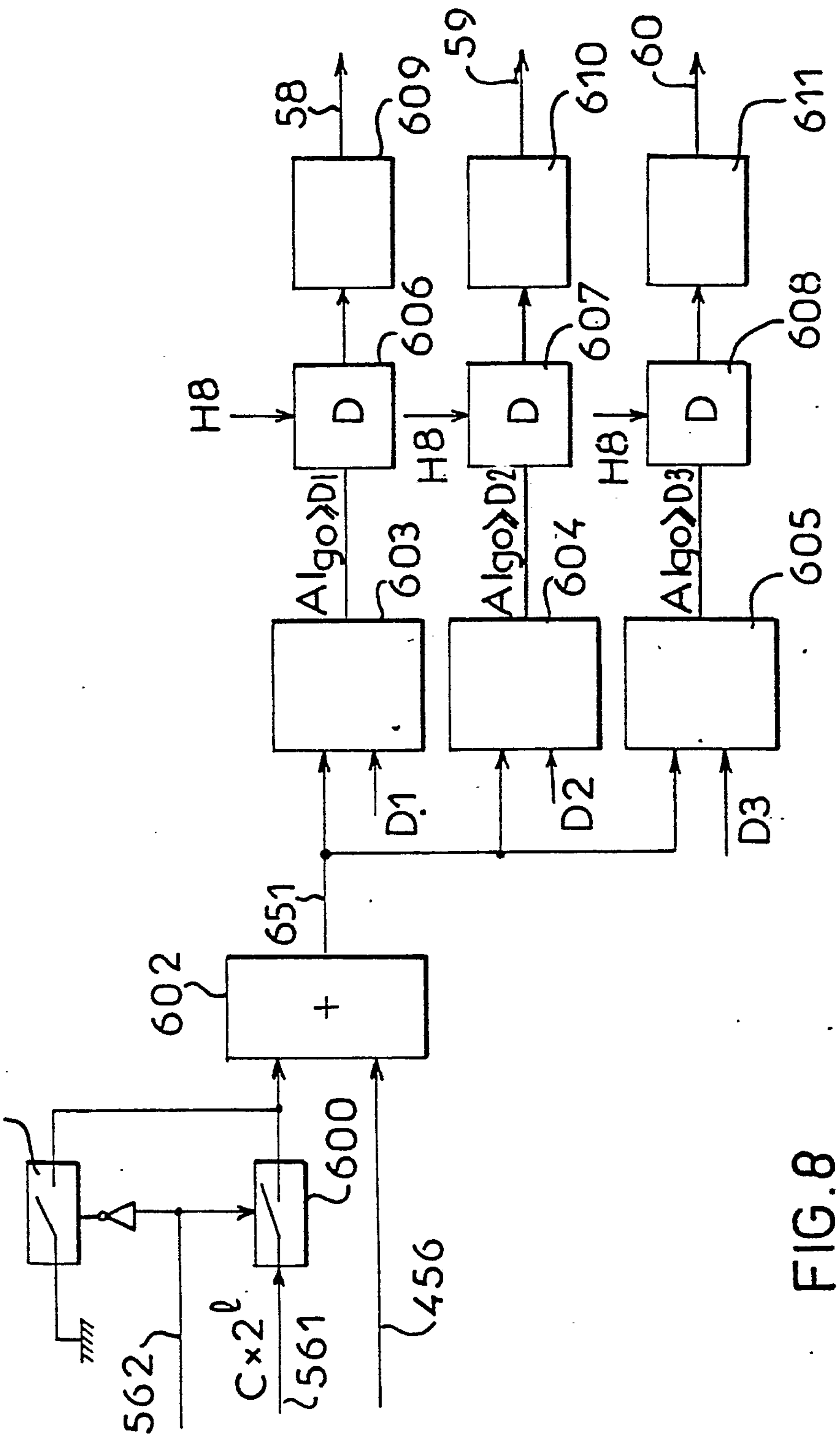
601
600
602
651
603
604
605
606
607
608
609
610
611
58
59
60
562
561
456
C×2^l
+
D
H8
D1
D2
D3
Algo≥D1
Algo≥D2
Algo≥D3

FIG.8

FIG.9

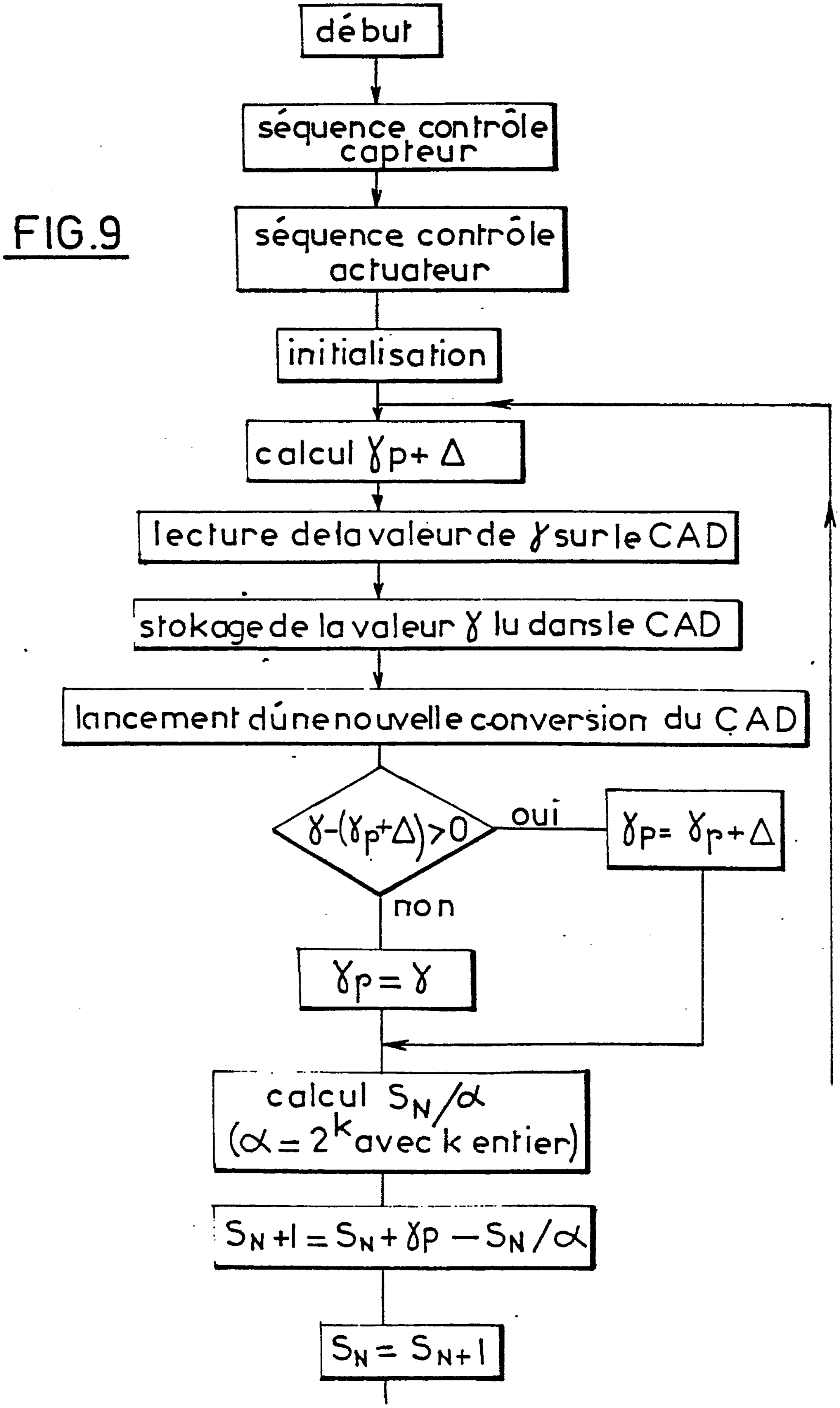
début
séquence contrôle capteur
séquence contrôle actuateur
initialisation
calcul $\gamma p + \Delta$
lecture de la valeur de $\gamma$ sur le CAD
stokage de la valeur $\gamma$ lu dans le CAD
lancement d'une nouvelle conversion du CAD
$\gamma - (\gamma_p + \Delta) > 0$
oui
$\gamma p = \gamma p + \Delta$
non
$\gamma p = \gamma$
calcul $S_N / \alpha$
($\alpha = 2^k$ avec k entier)
$S_{N+1} = S_N + \gamma p - S_N / \alpha$
$S_N = S_{N+1}$

FIG.10

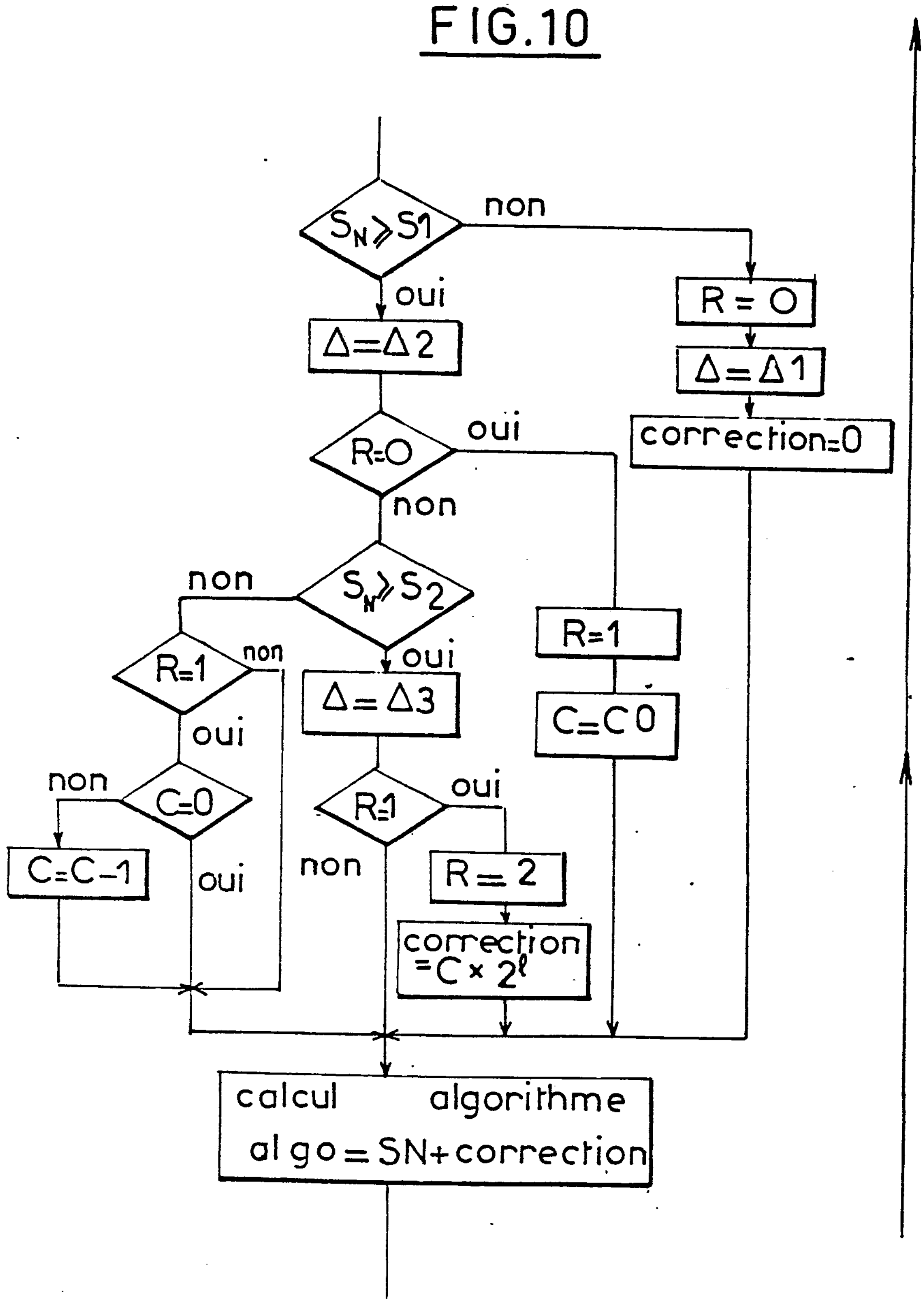
SN≥S1
non
oui
R = O
Δ=Δ1
correction=0
Δ=Δ2
R=O
oui
non
SN≥S2
non
oui
R=1
non
oui
C=0
non
oui
C=C−1
Δ=Δ3
R=1
oui
non
R=1
C=C0
R= 2
correction =C×2ℓ
calcul algorithme
algo=SN+correction

FIG.11

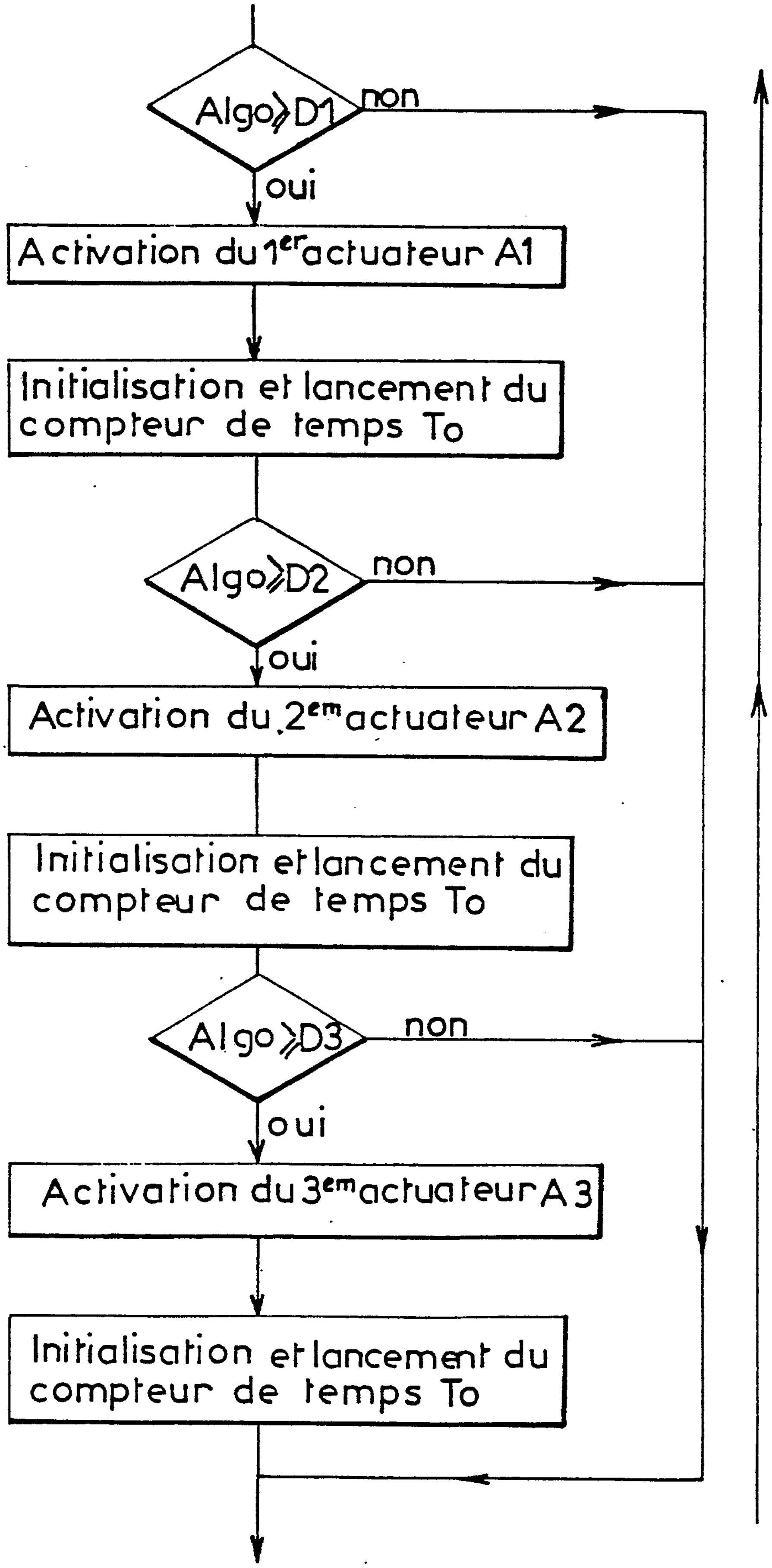
Algo≥D1
non
oui
Activation du 1er actuateur A1
Initialisation et lancement du compteur de temps To
Algo≥D2
non
oui
Activation du 2em actuateur A2
Initialisation et lancement du compteur de temps To
Algo≥D3
non
oui
Activation du 3em actuateur A3
Initialisation et lancement du compteur de temps To